# EUROPÄISCHE PATENTANMELDUNG

(11) **EP 1 203 691 A2**
(43) Veröffentlichungstag der Anmeldung: **08.05.2002**
(21) Anmeldenummer: 01124412.6
(22) Anmeldetag: 11.10.2001
(51) Int. Cl.: B60N 2/56

(54) **Kraftwagensitz mit Luftversorgungseinrichtung**

(30) Priorität: 01.11.2000 DE 10054010
(71) Anmelder: DaimlerChrysler AG, 70567 Stuttgart (DE)
(72) Erfinder: Bargheer, Claudio, 70435 Stuttgart (DE); Nordberg, Peter, 8010 Graz (AT); Orizaris, Vasilios, 71272 Renningen (DE); Pfahler, Karl, Dr., 70180 Stuttgart (DE); Renner, Lothar, 71154 Nufringen (DE)

(57) **Zusammenfassung**

Die Erfindung betrifft einen Kraftwagensitz für einen offenen Kraftwagen mit einem Sitzkissenteil und einer mit zugehöriger Kopfstütze versehenen Rückenlehne, in deren oberen Bereich zur Verminderung unerwünschter Zuglufterscheinungen für den Sitzinsassen wenigstens ein Luftausströmer mit zugeordneter Luftausströmdüse einer Luftversorgungseinrichtung angeordnet ist.

Der Luftausströmer ist gegenüber der Rückenlehne höhenverstellbar und in der eingestellten Höhenlage sicherbar.

## Beschreibung

Die Erfindung betrifft einen Kraftwagensitz nach dem Oberbegriff des Patentanspruchs 1.

Ein solcher, der DE 196 54 370 C1 als bekannt zu entnehmender Kraftwagensitz für einen offenen Kraftwagen umfaßt einen Sitzkissenteil und eine mit zugehöriger Kopfstütze versehene Rückenlehne. Zwischen der Rückenlehne und der Kopfstütze sind zur Verminderung unerwünschter Zuglufterscheinungen beim offenen Fahren für den Sitzinsassen mehrere Luftausströmer mit jeweils zugeordneten Luftausströmdüsen einer Luftversorgungseinrichtung angeordnet. Dabei ist es bei dem bekannten Kraftwagensitz als nachteilig zu betrachten, dass die aus den Luftausströmern austretenden Luftströme gar nicht oder nur sehr eingeschränkt auf die Bedürfnisse von unterschiedlichen Sitzinsassen anpassbar sind.

Aufgabe der Erfindung ist es daher, einen Kraftwagensitz gemäß dem Oberbegriff des Patentanspruchs 1 zu schaffen, dessen aus dem wenigstens einen Luftausströmer austretender Luftstrom besser auf die Bedürfnisse unterschiedlicher Sitzinsassen anpassbar ist.

Diese Aufgabe wird erfindungsgemäß durch einen Kraftwagensitz mit den Merkmalen des Patentanspruchs 1 gelöst.

Vorteilhafte Ausführungsformen mit zweckmäßigen Weiterbildungen der Erfindung sind in den Unteransprüchen angegeben.

Beim Kraftwagensitz nach der Erfindung ist der wenigstens eine Luftausströmer gegenüber der Rückenlehne höhenverstellbar und dadurch der aus dem Luftausströmer austretende Luftstrom in optimaler Weise auf die Größe und die Bedürfnisse von unterschiedlichen Sitzinsassen anpassbar. Dabei kann der Luftausströmer vorzugsweise in einer Höhe eingestellt und gesichert werden, in welcher der Kopf-, Schulter und Nackenbereich des Sitzinsassen optimal mit Warmluft versorgt werden kann.

Als besonders vorteilhaft hat es sich gezeigt, die Höhenverstellung des Luftausströmers an die Höhenverstellung der Kopfstütze zu koppeln, wodurch bei einer optimalen Positionierung der Kopfstütze auch eine optimale Lage des Luftausströmers bzw. eine optimale Ausrichtung des daraus austretenden Luftstromes relativ zum Kopf-, Schulter und Nackenbereich des Sitzinsassen zu erreichen ist.

Als besonders wirkungsvoll hat sich der Luftstrom aus einem Luftausströmer erwiesen, welcher in die Kopfstütze integriert ist. Durch diese Integration kann auf einfache Weise die Koppelung zwischen der Höhenverstellung der Kopfstütze und der Höhenverstellung des Luftausströmers realisiert werden.

Die Höhenverstellung des Luftausströmers gegenüber einem Versorgungskanal der Luftversorgungseinrichtung erfolgt auf einfache Weise durch eine teleskopartige Schiebeführung der beiden Bauteile. Alternativ wäre z.B. die Verbindung des Luftausströmers mit dem Versorgungskanal über einen Faltenbalg denkbar, durch den die Höhenverstellung des Luftausströmers ermöglicht wäre.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig.1: eine schematische perspektivische Vorderansicht auf den erfindungsgemäßen Kraftwagensitz, innerhalb dem eine Luftversorgungseinrichtung mit einem in die Kopfstütze integrierten oberen Luftausströmer angeordnet ist;
- Fig.2: eine schematische perspektivische Rückansicht auf den Kraftwagensitz gemäß Fig.1;
- Fig.3: eine schematische Seitenansicht auf den Kraftwagensitz nach den Figuren 1 und 2; sowie in
- Fig.4: eine schematische, perspektivische Rückansicht auf den oberen Bereich der Rückenlehne und der Luftversorgungseinrichtung gemäß den Figuren 1 bis 3, wobei der in die Kopfstütze integrierte Luftausströmer gegenüber einem Versorgungskanal teleskopartig höhenverschiebbar ist.

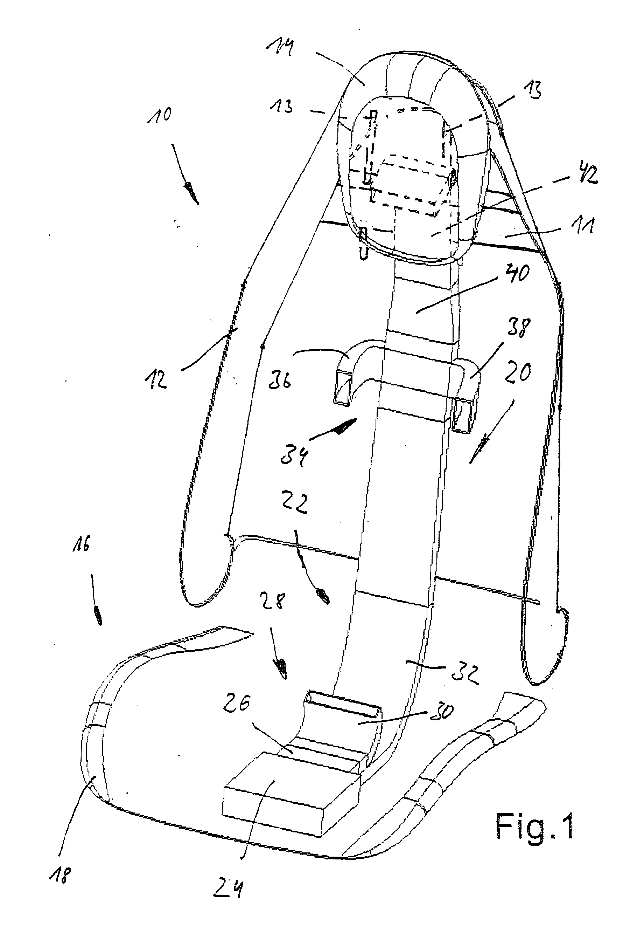

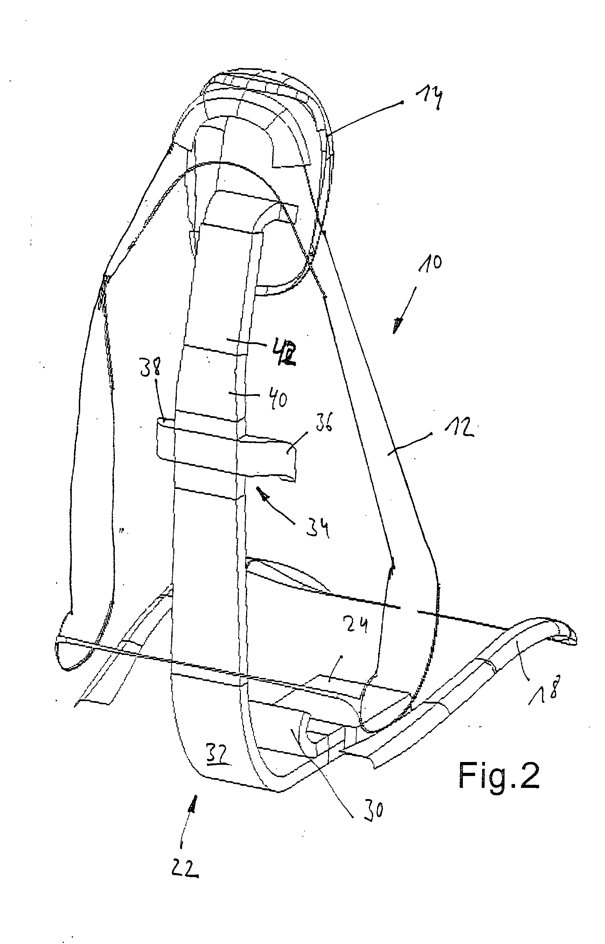

In den Figuren 1 und 2 ist jeweils eine schematische perspektivische Vorder- und Rückansicht auf den Kraftwagensitz eines offenen Kraftwagen gezeigt. Von der Rückenlehne 10 sind hier ein Lehnenrahmen 12 und eine höhenverstellbare Kopfstütze 14 erkennbar. Die Kopfstütze 14 ist über gestrichelt angedeutete Führungsstangen 13 höhenverstellbar an einer Führungseinrichtung 11 gehalten, welche mit dem Lehnenrahmen 12 fest verbunden ist. Vom Sitzkissenteil 16 ist lediglich ein unterer Rahmen 18 dargestellt. In die Rückenlehne 10 und das Sitzkissenteil 16 des Kraftwagensitzes ist eine Luftversorgungseinrichtung 20 integriert, welche eine Kanalanordnung 22 umfaßt. Der Kanalanordnung 22 ist hier ein von einem Gehäuse aufgenommenes Gebläse 24 vorgeschaltet, dessen Luftansaugung an der Unterseite des Sitzkissenteils 16 erfolgt. Druckseitig des Gebläses 24 gelangt der Luftstrom zu einem zuschaltbaren Heizelement 26, mit dem der Luftstrom auf Wunsch des Sitzinsassen temperiert werden kann. Dem Heizelement 26 ist eine Verteileinrichtung 28 nachgeschaltet, mit welcher der Luftstrom - je nach Einstellung des Fahrgastes - an einen unteren Teilkanal 30 und/oder einen oberen Teilkanal 32 verteilt werden kann. Der untere Teilkanal 30 dient zur Versorgung von nicht gezeigten Luftausströmöffnungen im Sitzbezug des Sitzkissenteils 16, welche der Sitzheizung oder der Sitzbelüftung dienen. Zur Einstellung der Teilluftströme sind in den Teilkanälen 30 und 32 Absperrorgane und/oder Leiteinrichtungen vorgesehen. In diesem Zusammenhang wäre es natürlich auch denkbar, in jedem Teilkanal 30,32 ein separates Heizelement 26 oder alternativ ein Kühlelement anzuordnen. Etwa auf halber Höhe der Rückenlehne 10 ist eine weitere Verteileinrichtung 34 angeordnet, mit der durch den Teilkanal 32 strömende Luft an zwei Teilkanäle 36 und 38 zur Versorgung von Luftausströmöffnungen im nicht gezeigten Sitzbezug der Rückenlehne 10 abgezweigt, oder über einen Versorgungskanal 40 zur Luftversorgung eines gestrichelt angedeuteten Luftausströmers 42 in der Kopfstütze 14 verteilt werden kann. Zur Einstellung der Teilluftströme in den Teilkanälen 36,38 und 40 sind auch hier Absperrorgane vorgesehen. Die beiden Teilkanäle 36 und 38 sind in Draufsicht im wesentlichen U-förmig ausgebildet. Die nicht gezeigten Luftausströmöffnungen im Sitzbezug der Rückenlehne 10 dienen der Sitzheizung oder der Sitzbelüftung derselben. Der Luftausströmer 42 in der Kopfstütze 14 dient zur Verminderung von Zuglufterscheinungen, welche beim Fahren mit offenem Verdeck entstehen.

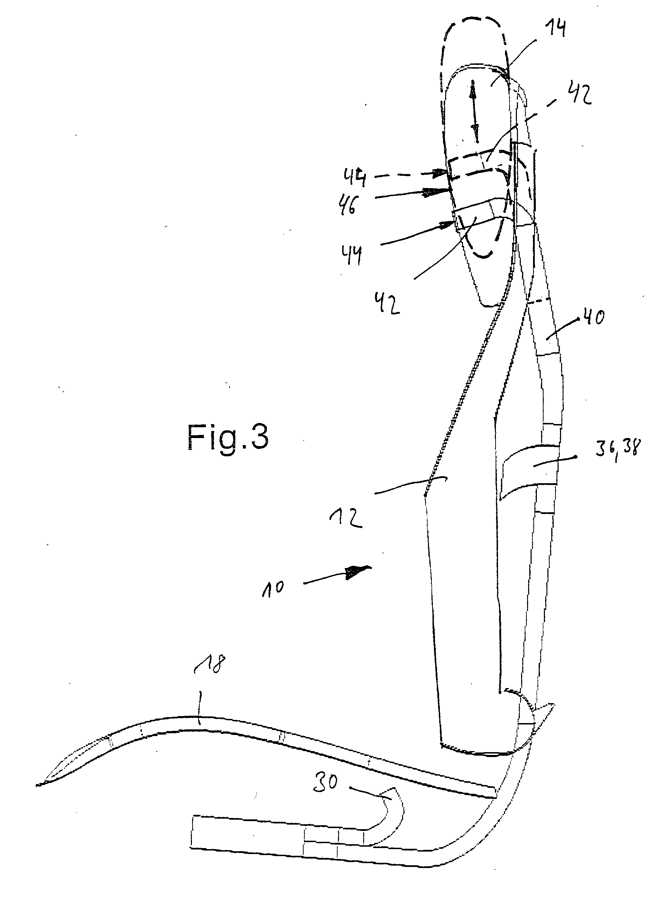

In Zusammenschau mit Fig.3, welche eine schematische Seitenansicht auf den Kraftwagensitz nach den Figuren 1 und 2 zeigt, ist erkennbar, dass der Luftausströmer 42 mit seiner Luftausströmdüse 44 etwa flächenbündig integriert in die Kopfstütze 14 an deren Vorderseite 46 endet. Der Luftausströmer 42 ist dabei im Bereich der Luftausströmdüse 44 mit seinem vorderen oberen Ende an der Kopfstütze 14 befestigt. Diese Befestigung kann beispielsweise durch ein Einschäumen des vorderen Endes des Luftausströmers 44 in das Polster der Kopfstütze 14 realisiert sein. Auch wäre es möglich, über andere Befestigungsmittel den Luftausströmer 42 mit seinem vorderen Ende an der Kopfstütze 14 zu befestigen. Dadurch ist der Luftausströmer 42 bzw. die Luftausströmdüse 44 derart mit der höhenverstellbaren Kopfstütze 14 bewegungsgekoppelt, dass sich nach dem Anpassen der Kopfstütze 14 auch die Luftausströmdüse 44 optimal in Bezug auf den Kopf des Insassen befindet und der aus der Luftausströmdüse 44 austretende Luftstrom optimal auf den Kopf- und Nackenbereich des Fahrgastes gerichtet ist. Die Kopfstütze 14 und der in diese integrierte Luftausströmer 42 sind mit ausgezogenen Linien in einer unteren Lage und gestrichelt in einer nach oben höhenverstellten Lage gezeigt. Dabei ist erkennbar, dass der Luftausströmer 42 mit seinem unteren Ende gegenüber dem Versorgungskanal 40 der Luftversorgungseinrichtung 20 teleskopartig höhenverschiebbar ist und somit der Höhenverstellung der Kopfstütze 14 folgen kann. Die Sicherung sowohl der Kopfstütze 14 als auch des Luftausströmers 42 erfolgt in dem hier gezeigten Ausführungsbeispiel über die die Führungsstangen 13 höhenverstellbar aufnehmende Führungseinrichtung 11 (Fig.1).

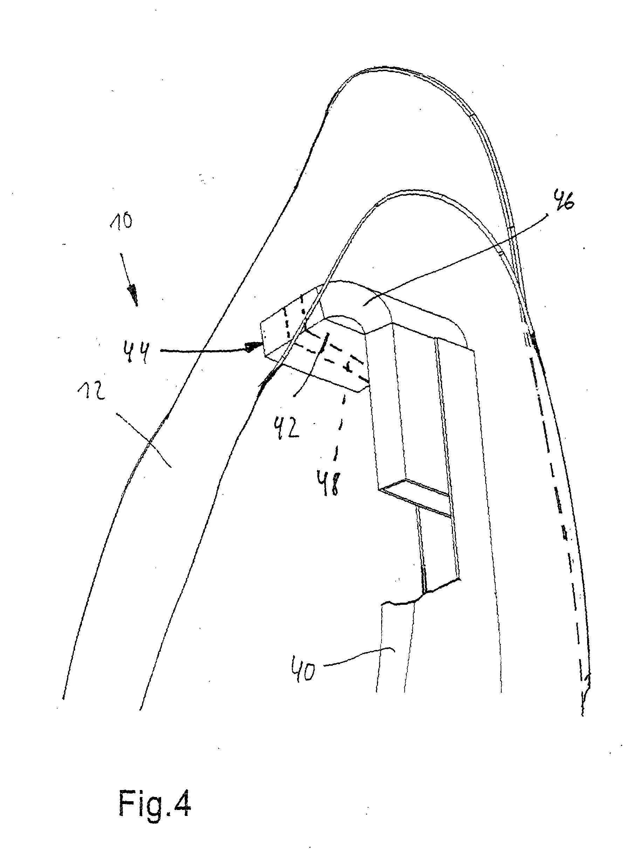

Fig.4 zeigt in vergrößerter Darstellung eine schematische, perspektivische Rückansicht auf den oberen Bereich der Rückenlehne 10 und die Luftversorgungseinrichtung 20 gemäß den Figuren 1 bis 3. Der mit seinem vorderen Ende in die hier nicht gezeigte Kopfstütze 14 integrierte Luftausströmer 42 ist durch eine Schiebeführung teleskopartig innerhalb des Versorgungskanals 40 aufgenommen, welcher an seinem oberen Ende hier der besseren Übersichtlichkeit halber aufgeschnitten dargestellt ist. Die Schiebeführung ist luftdicht ausgeführt. Anstelle einer Schiebeführung wäre die Verbindung des Luftausströmers 42 mit dem Versorgungskanal 40 über einen Faltenbalg denkbar. Der Eckbereich 46 des Luftausströmers 42 kann flexibel gestaltet sein, um eine Neigungseinstellung der Kopfstütze 14 zu ermöglichen. Ist eine in Fahrzeuglängsrichtung breitenveränderbare Kopfstütze 14 vorgesehen, so kann eine weitere Schiebeführung oder ein gestichelt angedeuteter weiterer Faltenbalg 48 vorgesehen sein. Es ist erkennbar, dass die Luftausströmdüse 44 hier einen rechteckigen Ausströmquerschnitt aufweist.

Als im Rahmen der Erfindung mitumfaßt ist es zu betrachten, dass der Luftausströmer nicht in die Kopfstütze integriert zu sein braucht, sondern vielmehr auch außerhalb der Kopfstütze angeordnet sein kann. Dabei kann der Luftausströmer auch über separate Sicherungsmittel in seiner eingestellten Höhenlage sicherbar sein.

## Patentansprüche

1. Kraftwagensitz für einen offenen Kraftwagen mit einem Sitzkissenteil (16) und einer mit zugehöriger Kopfstütze (14) versehenen Rückenlehne (10), in deren oberen Bereich zur Verminderung unerwünschter Zuglufterscheinungen für den Sitzinsassen wenigstens ein Luftausströmer (42) mit zugeordneter Luftausströmdüse (44) einer Luftversorgungseinrichtung (20) angeordnet ist,
**dadurch gekennzeichnet,**
**dass** der Luftausströmer (42) gegenüber der Rückenlehne (10) höhenverstellbar und in der eingestellten Höhenlage sicherbar ist.

2. Kraftwagensitz nach Anspruch 1,
**dadurch gekennzeichnet,**
**dass** die Kopfstütze (14) höhenverstellbar an der Rückenlehne (10) angeordnet ist, wobei die Höhenverstellung des Luftausströmers (42) mit der Höhenverstellung der Kopfstütze (14) bewegungsgekoppelt ist.

3. Kraftwagensitz nach Anspruch 1 oder 2,
**dadurch gekennzeichnet,**
**dass** der Luftausströmer (42) zumindest im Bereich der Luftausströmdüse (44) in die Kopfstütze (14) integriert und der austretende Luftstrom auf den Kopf- und Nackenbereich des Sitzinsassen gerichtet ist.

4. Kraftwagensitz nach Anspruch 3,
**dadurch gekennzeichnet,**
**dass** der Luftausströmer (42) an der dem Kopf des Sitzinsassen zugewandte Vorderseite (46) der Kopfstütze (14) endet.

5. Kraftwagensitz nach Anspruch 1,
**dadurch gekennzeichnet,**
**dass** der Luftausströmer (42) gegenüber einem Versorgungskanal (40) der Luftversorgungseinrichtung (20) teleskopartig höhenverschiebbar ist.

6. Kraftwagensitz nach Anspruch 1,
**dadurch gekennzeichnet,**
**dass** zwischen dem höhenverstellbaren Luftausströmer (42) und einem Versorgungskanal (40) der ein Faltenbalg vorgesehen ist.

7. Kraftwagensitz nach Anspruch 1,
**dadurch gekennzeichnet,**
**dass** die Luftausströmdüse (44) des Luftausströmers (42) einen rechteckigen Ausströmquerschnitt aufweist.
